(19) Europäisches Patentamt
European Patent Office
Office européen des brevets

(11) **EP 2 567 500 B1**

(12) **FASCICULE DE BREVET EUROPEEN**

(45) Date de publication et mention de la délivrance du brevet:
**19.04.2017 Bulletin 2017/16**

(21) Numéro de dépôt: **11716949.0**

(22) Date de dépôt: **03.05.2011**

(51) Int Cl.:
*H04L 9/08* (2006.01)   *H04N 7/16* (2011.01)
*H04N 7/167* (2011.01)   *H04N 7/173* (2011.01)

(86) Numéro de dépôt international:
**PCT/EP2011/057066**

(87) Numéro de publication internationale:
**WO 2011/138333 (10.11.2011 Gazette 2011/45)**

(54) **PROCEDES DE DECHIFFREMENT, DE TRANSMISSION ET DE RECEPTION DE MOTS DE CONTROLE, SUPPORT D'ENREGISTREMENT ET SERVEUR DE MOTS DE CONTROLE POUR LA MISE EN OEUVRE DE CES PROCEDES**

VERFAHREN, AUFZEICHNUNGSMEDIUM UND SERVER ZUR VERSCHLÜSSELUNG, ZUM SENDEN UND ZUM EMPFANGEN VON STEUERWÖRTERN

METHOD, RECORDING MEDIUM AND SERVER FOR DECRYPTION, TRANSMISSION AND RECEPTION OF THE CONTROL WORDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2010 FR 1053467**

(43) Date de publication de la demande:
**13.03.2013 Bulletin 2013/11**

(73) Titulaire: **Viaccess**
**92057 Paris La Défense (FR)**

(72) Inventeurs:
• **DUBROEUCQ, Gilles**
**F-28130 St Piat (FR)**
• **MAGIS, Erwann**
**F-75017 Paris (FR)**

(74) Mandataire: **Colombo, Michel et al**
**Brevinnov**
**310 avenue Berthelot**
**69008 Lyon (FR)**

(56) Documents cités:
WO-A1-01/95613        WO-A2-2009/112966
US-A1- 2008 301 437

• **MENEZES A ET AL: "Handbook of Applied Cryptography, Chapter 13 (Key Management Techniques)", 1 janvier 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 547 - 555, XP002591810, ISBN: 978-0-8493-8523-0 Sections 13.2.4,13.3.1**
• **FRANCIS ET AL: "Countermeasures for attacks on satellite TV cards using open receivers", AUSTRALASIAN INFORMATION SECURITY WORKSHOP.: DIGITAL RIGHTSMANAGEMENT, XX, XX, 6 novembre 2004 (2004-11-06), pages 1-6, XP002333719,**

**Description**

L'invention concerne un procédé de déchiffrement de mots de contrôle pour des terminaux mécaniquement et électroniquement indépendants les uns des autres. L'invention concerne également un procédé de transmission et un procédé de réception de mots de contrôle pour la mise en oeuvre du procédé de déchiffrement. L'invention concerne aussi un support d'enregistrement d'informations et un serveur de mots de contrôle pour la mise en oeuvre de ce procédé.
Il existe des procédés de chiffrement de mots de contrôle dans lesquels :

- en réponse à l'absence, dans l'un quelconque des terminaux, d'un ou plusieurs mots de contrôle $CW_c$ pour désembrouiller une ou plusieurs cryptopériodes d'un contenu multimédia, ce terminal transmet à un serveur de mots de contrôle une requête contenant le ou les cryptogrammes d'un ou plusieurs des mots de contrôle absents, et en réponse
- le serveur de mots de contrôle transmet à ce terminal le ou les mots de contrôle absents.

Par contenu multimédia on désigne un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.
Il est connu de diffuser plusieurs contenus multimédias en même temps. Pour cela, chaque contenu multimédia est diffusé sur son propre canal. Le canal utilisé pour transmettre un contenu multimédia est également connu sous le terme de « chaine ». Un canal correspond typiquement à une chaine de télévision. Cela permet à un utilisateur de choisir simplement le contenu multimédia qu'il souhaite visualiser en changeant de canal.
Pour sécuriser et soumettre la visualisation des contenus multimédias à certaines conditions, comme la souscription d'un abonnement payant par exemple, les contenus multimédias sont diffusés sous forme embrouillée et non pas en clair. Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre. De plus, le mot de contrôle est généralement spécifique à un contenu multimédia, ce dernier étant aléatoirement ou pseudo aléatoirement tiré. Ainsi, si à un instant donné N contenus multimédias sont simultanément diffusés sur N canaux, il existe N mots de contrôle différents et indépendants employés chacun pour embrouiller l'un de ces contenus multimédias.
Ici, les termes « embrouiller »/ « désembrouiller » et « chiffrer »/ « déchiffrer » sont considérés comme des synonymes.
Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.
Les mots de contrôle nécessaires pour désembrouiller les contenus multimédias sont transmis de manière synchronisée avec les contenus multimédias. Par exemple, les mots de contrôle nécessaires pour désembrouiller la t-ième cryptopériode sont reçus par chaque terminal pendant la (t-1)-ième cryptopériode. Pour cela, par exemple, les mots de contrôle sont multiplexés avec le contenu multimédia embrouillé.
Pour sécuriser la transmission des mots de contrôle, ceux-ci sont transmis aux terminaux sous forme de cryptogrammes. On désigne ici par cryptogramme une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia. Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé cryptographique. Dans ce cas, l'information secrète et la clé cryptographique permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète est la table associant à chaque référence un mot de contrôle en clair.
L'information secrète doit être préservée en lieu sûr. Pour cela, il a déjà été proposé de stocker l'information secrète :

- soit dans des processeurs de sécurité tels que des cartes à puce directement connectées à chacun des terminaux,
- soit, plus récemment, dans un serveur de mots de contrôle commun à plusieurs terminaux.

Dans ce dernier cas, les terminaux sont dépourvus de carte à puce. On parle alors de terminaux sans carte ou « cardless terminal » en anglais.

Le serveur de mots de contrôle est connecté à chacun des terminaux par un réseau grande distance de transmission d'informations tel que le réseau Internet. Lorsqu'un serveur de mots de contrôle est utilisé, les cryptogrammes des mots de contrôle sont d'abord transmis aux différents terminaux avant d'être renvoyés par ces terminaux vers le serveur de mots de contrôle. Cette façon de procéder présente plusieurs avantages. En particulier, le réseau de transmission d'informations utilisé pour diffuser les contenus multimédias et les cryptogrammes des mots de contrôle peut être différent de celui utilisé pour relier les terminaux au serveur de mots de contrôle. Par exemple, le réseau pour la diffusion des contenus multimédias et des cryptogrammes des mots de contrôle est un réseau unidirectionnel à large bande passante tel qu'un réseau satellitaire. A l'inverse, le réseau reliant les terminaux au serveur de mots de contrôle est un réseau bidirectionnel dont la bande passante peut être plus réduite.

Ensuite, cela simplifie la synchronisation temporelle entre la diffusion des contenus multimédias et la diffusion des cryptogrammes des mots de contrôle correspondants.

Le serveur de mots de contrôle a normalement pour fonction de déchiffrer les cryptogrammes des mots de contrôle transmis par les terminaux pour ensuite retourner vers chacun de ces terminaux les mots de contrôle déchiffrés. Ainsi, en quelque sorte, le serveur de mots de contrôle joue le rôle d'une carte à puce commune à plusieurs terminaux mécaniquement et électroniquement indépendants les uns des autres. Des terminaux électroniquement indépendants les uns des autres sont des terminaux capables de fonctionner de façon autonome et ne présentant aucune partie électronique ou logicielle partagée.

Lorsqu'un terminal a besoin d'un mot de contrôle pour désembrouiller un contenu multimédia, il envoie au serveur de mots de contrôle une requête contenant le cryptogramme du mot de contrôle. En réponse, le serveur de mots de contrôle déchiffre ce cryptogramme puis renvoie le mot de contrôle déchiffré au terminal qui peut alors désembrouiller le contenu multimédia souhaité.

Les contenus multimédias diffusés sur les différents canaux peuvent être coordonnés temporellement entre eux. Par exemple, les instants de diffusion des contenus multimédias sont réglés pour respecter les horaires de diffusion indiqués sur une grille de programmes préétablie. Chaque terminal sur un canal donné reçoit donc sensiblement en même temps le même contenu multimédia. On dit que ces contenus multimédias sont des flux «live» ou « linéarisés » car l'utilisateur ne contrôle par leur instant de transmission.

A l'inverse, certains contenus multimédias sont transmis à la demande. C'est par exemple le cas avec des services tels que la vidéo à la demande ou « Video On Demand » en anglais. C'est également le cas lorsque les contenus multimédias sont enregistrés localement depuis le terminal ou à distance depuis le réseau et que le déclenchement et le déroulement de la visualisation sont contrôlés par l'utilisateur. Un tel service est par exemple connu sous l'acronyme NPVR (« Network Private Video Recorder »). Il peut aussi s'agir d'un service permettant de remonter dans le temps ou de différer la visualisation tel que le service connu sous l'acronyme NTS (Network Time Shifting). Dans ces derniers cas, le contenu multimédia est appelé contenu « délinéarisé » car c'est l'utilisateur qui décide du moment où le terminal joue ce contenu.

Généralement, le nombre de mots de contrôle chiffrés contenus dans une requête est limité à un ou deux pour accroître la sécurité du système cryptographique. En effet, si le nombre de mots de contrôle chiffrés contenus dans une requête augmente, alors le nombre de mots de contrôle en clair stockés dans chaque terminal pour désembrouiller un même contenu multimédia augmente. Or plus le nombre de mots de contrôle en clair stockés dans les terminaux augmente, plus la sécurité du système risque d'être compromise. Par exemple, un nombre important de mots de contrôle stockés dans chaque terminal facilite des attaques telles que le partage de mots de contrôle. Cette attaque consiste à diffuser illicitement vers d'autres terminaux n'ayant pas souscrit d'abonnement correspondant les mots de contrôle en clair obtenus par un terminal ayant souscrit un abonnement pour déchiffrer ces mots de contrôle.

Dès lors, chaque terminal envoie au serveur de mots de contrôle une requête à chaque ou toutes les deux cryptopériodes.

Le traitement d'une requête par le serveur de mots de contrôle prend un certain temps et plus le nombre de requêtes à traiter augmente plus la charge de travail de ce serveur augmente. Plus la charge de travail augmente, plus la puissance de calcul du serveur de mots de contrôle doit être importante. De l'état de la technique est connu de :

- US2008/0301437A1, et
- WO2009/112966A2.

Il est par conséquent souhaitable de pouvoir diminuer la charge de travail du serveur de mots de contrôle pour utiliser des serveurs ayant une puissance de calcul plus limitée.

L'invention vise à satisfaire ce souhait en proposant un procédé de déchiffrement conforme à la revendication 1.

Le fait d'envoyer des mots de contrôle supplémentaires en plus des mots de contrôle absents permet d'augmenter le nombre de mots de contrôle présents dans le terminal et donc de réduire la fréquence des requêtes transmises par ce terminal au serveur de mots de contrôle. Cette réduction de la fréquence se traduit par une réduction de la charge de travail du serveur de mots de contrôle.

De plus, ici, cette augmentation du nombre de mots de contrôle stockés dans le terminal n'est pas faite au détriment de la sécurité du système cryptographique puisque cette augmentation est uniquement mise en oeuvre pour certains terminaux sélectivement choisis où le risque de compromission des mots de contrôle stockés est faible.

L'invention a également pour objet un procédé de transmission de mots de contrôle à des terminaux mécaniquement et électroniquement indépendants les uns des autres conforme à la revendication 2.

Les modes de réalisation de ce procédé de transmission de mots de contrôle peuvent comporter une ou plusieurs des caractéristiques des revendications dépendantes.

Ces modes de réalisation du procédé de transmission de mots de contrôle présentent en outre les avantages suivants :

- déterminer le nombre de mots de contrôle supplémentaires à transmettre en fonction d'estimations du nombre de requêtes à traiter par le serveur de mots de contrôle par cryptopériode permet de lisser la charge de travail du serveur de mots de contrôle sur plusieurs cryptopériodes,
- déterminer le nombre de mots de contrôle supplémentaires en fonction d'un nombre aléatoire permet de lisser la charge de travail du serveur de mots de contrôle sur plusieurs cryptopériodes sans faire appel à une estimation de la charge de travail de ce serveur sur chacune de ces cryptopériodes ;
- ajuster le nombre de mots de contrôle supplémentaires en fonction du nombre probable de cryptopériodes successives de ce contenu multimédia qui seront à désembrouiller permet de limiter encore plus la charge de travail du serveur de mots de contrôle en évitant un envoi excessif de mots de contrôle supplémentaires.

L'invention a également pour objet un procédé de réception de mots de contrôle par un terminal pour la mise en oeuvre du procédé ci-dessus, dans lequel :

- en réponse à l'absence dans ce terminal d'un ou plusieurs mots de contrôle $CW_c$ pour désembrouiller une ou plusieurs cryptopériodes d'un contenu multimédia, ce terminal transmet au serveur de mots de contrôle une requête contenant le ou les cryptogrammes d'un ou plusieurs mots de contrôle absents, et
- le terminal reçoit, en plus des mots de contrôle absents requis, un nombre déterminé de mots de contrôle supplémentaires pour permettre à ce terminal de désembrouiller des cryptopériodes supplémentaires du même contenu multimédia en plus des cryptopériodes désembrouillables à l'aide des mots de contrôle absents $CW_c$ requis.

L'invention a également pour objet un support d'enregistrement d'informations comportant des instructions pour la mise en oeuvre des procédés ci-dessus lorsque ces instructions sont exécutées par un calculateur électronique.

Enfin, l'invention a également pour objet un serveur de mots de contrôle vers des terminaux mécaniquement et électroniquement indépendants les uns des autres conforme à la revendication 10.

L'invention sera mieux comprise à la lecture de la description qui va suivre, donnée uniquement à titre d'exemple non limitatif et faite en se référant aux dessins sur lesquels :

- la figure 1 est une illustration schématique d'un système d'émission et de réception de contenus multimédias embrouillés,
- les figures 2 à 4 sont des illustrations schématiques de tables utilisées dans le système de la figure 1,
- la figure 5 est un organigramme d'un procédé de déchiffrement de mots de contrôle à l'aide du système de la figure 1, et
- la figure 6 est un organigramme d'un procédé de mise à jour d'une table de mots de contrôle.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :

- « Functional Model of Conditional Access System », EBU Review, Technical European Broadcasting Union, Brussels, BE, n° 266, 21 décembre 1995.

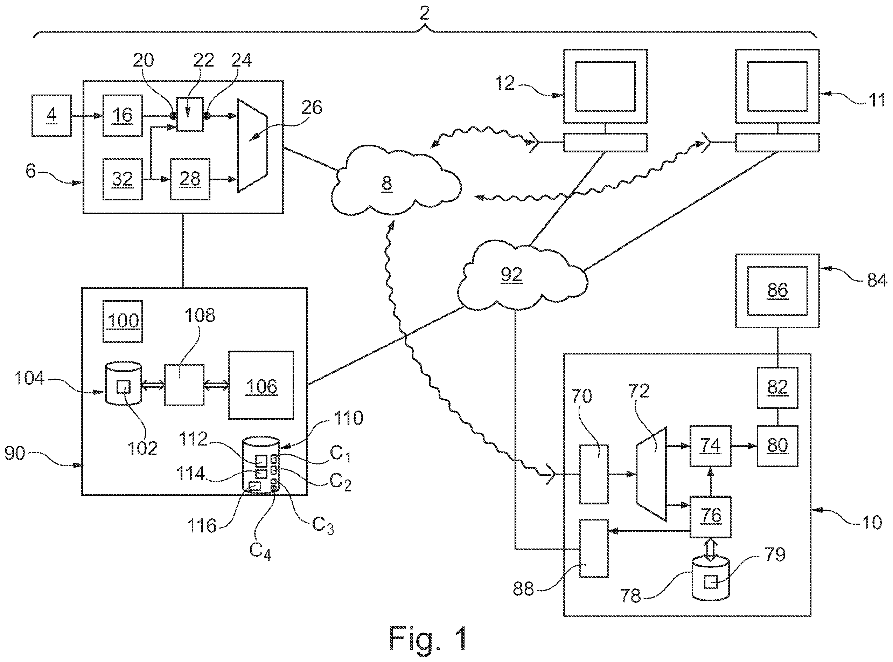

La figure 1 représente un système 2 d'émission et de réception de contenus multimédias embrouillés. Les contenus multimédias émis sont des contenus multimédias linéarisés ou délinéarisés. Par exemple, un contenu multimédia correspond à une séquence d'un programme audiovisuel tel qu'une émission de télévision ou un film.

Dans la suite de cette description, le système 2 est décrit dans le cas particulier où les contenus multimédias sont linéarisés.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie 24 raccordée à l'entrée d'un multiplexeur 26.

L'embrouilleur 22 embrouille chaque contenu multimédia compressé à l'aide d'un mot de contrôle $CW_{i,t}$ qui lui est fourni, ainsi qu'à un système 28 d'accès conditionnel, par un générateur 32 de clés. Le système 28 est plus connu sous l'acronyme CAS (Conditional Access System). L'indice $i$ est un identifiant du canal sur lequel est diffusé le contenu mulimédia embrouillé et l'indice $t$ est un identifiant de la cryptopériode embrouillée avec ce mot de contrôle. Dans la suite de cette description, la cryptopériode actuellement désembrouillée par les terminaux est la cryptopériode t-1.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Le système 28 génère des messages ECM (Entitlement Control Message) contenant au moins le cryptogramme $CW^*_{i,t}$ du mot de contrôle $CW_{i,t}$ généré par le générateur 32 et utilisé par l'embrouilleur 22 pour embrouiller la cryptopériode t du canal i. Ces messages et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 insère également dans chaque ECM :

- l'identifiant $i$ du canal,
- les cryptogrammes $CW^*_{i,t}$ et $CW^*_{i,t+1}$ des mots de contrôle $CW_{i,t}$ et $CW_{i,t+1}$ permettant de désembrouiller les cryptopériodes t et t+1 du canal i,
- les numéros t et t+1 identifiant les cryptopériodes désembrouillables avec les mots de contrôle $CW_{i,t}$ et $CW_{i,t+1}$,
- des étiquettes de temps $TS_t$ et $TS_{t+1}$, ou « timestamp » en anglais, qui repèrent les instants auxquels doivent être jouées les cryptopériodes t et t+1,
- des droits d'accès DA destinés à être comparés à des titres d'accès acquis par l'utilisateur, et
- une signature ou une redondance cryptographique MAC permettant de vérifier l'intégrité du message ECM.

Les étiquettes de temps sont soit définies par rapport à une origine absolue indépendante du contenu multimédia diffusé soit par rapport à une origine relative au contenu multimédia diffusé. Par exemple, une origine relative peut être le début du film lorsque le contenu multimédia est un film.

Le même identifiant $i$ est inséré dans tous les messages ECM contenant un cryptogramme $CW^*_{i,t}$ pour le désembrouillage des contenus multimédias diffusés sur un même canal.

A titre d'illustration, ici, l'embrouillage et le multiplexage des contenus multimédias est conforme au protocole DVB-Simulcrypt (ETSI TS 103 197). Dans ce cas, l'identifiant $i$ peut correspondre à un couple « channel ID/stream ID » unique sur lequel sont envoyées toutes les requêtes de génération de message ECM pour ce canal.

Par exemple, les terminaux 10 à 12 sont identiques et seul le terminal 10 est décrit plus en détail.

Le terminal 10 comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM et EMM (Entitlement Management Message) à un processeur 76. Le processeur 76 traite des informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 10. Cette robustesse est par exemple obtenue en implémentant un module logiciel dédié à la protection des informations secrètes.

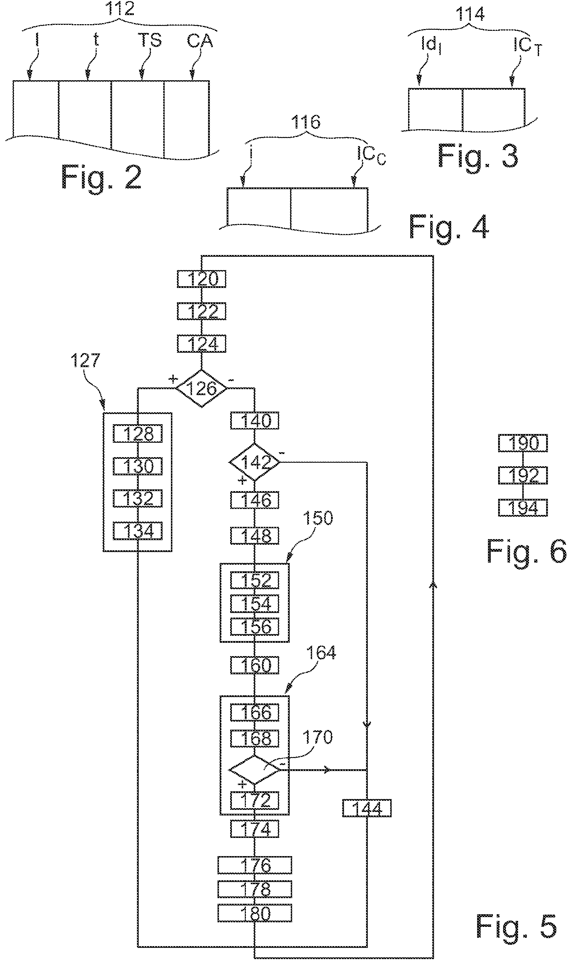

Le processeur 76 est par exemple réalisé à l'aide de calculateurs électroniques programmables aptes à exécuter des instructions enregistrées sur un support d'enregistrement d'informations. A cet effet, le processeur 76 est connecté à une mémoire 78 contenant les instructions nécessaires pour l'exécution du procédé de la figure 5.

La mémoire 78 contient également :

- un certificat cryptographique pour identifier et authentifier le terminal 10, et
- une table locale 79 de mots de contrôle.

Le désembrouilleur 74 désembrouille le contenu multimédia embrouillé à partir du mot de contrôle transmis par le processeur 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur un afficheur 84 équipé d'un écran 86.

L'afficheur 84 affiche en clair le contenu multimédia sur l'écran 86.

Le terminal 10 comprend également un émetteur 88 permettant d'établir une connexion sécurisée avec une tête de réseau 90 par l'intermédiaire d'un réseau 92 de transmission d'informations. Par exemple, le réseau 92 est un réseau grande distance de transmission d'informations et plus précisément un réseau à commutation de paquets tel que le réseau Internet. La connexion sécurisée est par exemple un tunnel sécurisé à l'aide du certificat cryptographique.

La tête de réseau 90 comprend un module 100 de gestion des titres d'accès des différents utilisateurs du système 2. Ce module 100 est plus connu sous le terme anglais de « subscriber authorization system ». Ce module 100 génère et maintient à jour une base de données 102. La base de données 102 associe à chaque identifiant d'utilisateur les titres d'accès acquis par cet utilisateur. Cette base de données 102 est stockée dans une mémoire 104.

La tête de réseau 90 comprend également un serveur 106 de mots de contrôle connecté à un module 108 de vérification de droit d'accès et à une mémoire 110. La mémoire 110 contient :

- une table 112 de mots de contrôle,
- une table 114 d'indices de confiance dans les terminaux,
- une table 116 d'indices de criticité des contenus multimédias, et
- des compteurs d'erreur de fonctionnement $C_1$, $C_2$, $C_3$ et $C_4$ associés à chaque terminal.

Le fonctionnement des compteurs d'erreur $C_1$ à $C_4$ est décrit plus en détail en regard de la figure 5.

Typiquement, le serveur 106 est réalisé à partir de calculateurs électroniques programmables aptes à exécuter des instructions enregistrées sur un support d'enregistrement d'informations. A cet effet, la mémoire 110 comprend également des instructions pour l'exécution des procédés des figures 5 et 6.

Un exemple de structure de la table 112 est représenté plus en détail sur la figure 2. Chaque ligne de la table 112 correspond à un enregistrement. La table 112 contient plusieurs enregistrements. Chaque enregistrement correspond à une cryptopériode. En particulier, la table 112 contient des enregistrements pour plus de trois cryptopériodes successives à venir de chaque contenu multimédia. Chacun de ces enregistrements contient les champs suivants :

- un champ $\underline{i}$ contenant l'identifiant $\underline{i}$ du canal diffusé,
- un champ t contenant le numéro de la cryptopériode,
- un champ $TS_t$ contenant l'étiquette de temps associée à la cryptopériode t,
- un champ CA contenant les conditions d'accès à cette cryptopériode t.

La structure de la table 79 est par exemple identique à la structure de la table 112.

La figure 3 représente plus en détail un exemple de structure pour la table 114. La table 114 associe à chaque identifiant $Id_T$ d'un terminal un indice de confiance $IC_T$ pour ce terminal. L'indice de confiance $IC_T$ est représentatif de la probabilité que la sécurité des mots de contrôle enregistrés dans ce terminal soit compromise. On considère que la sécurité d'un terminal est compromise lorsque les mots de contrôle qui sont enregistrés ou stockés dans ce terminal sont utilisés à des fins illicites pour, par exemple, permettre le désembrouillage de contenus multimédias par d'autres terminaux ne disposant pas de titre d'accès autorisant un tel désembrouillage. Dans la suite de cette description, plus la valeur de l'indice est faible, plus la probabilité que la sécurité des mots de contrôle stockés dans le terminal soit compromise est importante.

Ici, l'indice $IC_T$ représente la probabilité que les moyens matériels mis en oeuvre dans ce terminal résistent à une tentative de piratage. Il est donc représentatif du niveau de difficulté à obtenir et à utiliser illicitement des mots de contrôle stockés dans ce terminal.

Par exemple, la table 114 est fournie par l'opérateur du système 2.

A titre d'illustration, la valeur de l'indice $IC_T$ pour chaque terminal est la somme des notes obtenues par ce terminal sur plusieurs critères de sécurité différents.

La table ci-dessous donne un exemple de barème de notation :

| Critère de sécurité | Note si ce critère est satisfait | Note si ce critère n'est pas satisfait |
|---|---|---|
| Les traitements cryptographiques sont exécutés par un processeur de sécurité | 50 | 0 |
| Le code d'exécution des traitements cryptographiques est chiffré dans une mémoire non volatile | 15 | 0 |
| Le code d'exécution des traitements cryptographiques est chiffré en mémoire volatile lors de l'exécution de ce code | 30 | 0 |
| Un procédé d'obscurcissement du code d'exécution des traitements cryptographiques est mis oeuvre pour rendre l'observation de son déroulement difficile | 5 | 0 |

La valeur de l'indice $IC_T$ pour un terminal donné est la somme des notes obtenues pour chacun des critères de sécurité indiqués dans le tableau ci-dessus. Par exemple, si un terminal utilise un processeur de sécurité et possède un code d'exécution de traitement cryptographique chiffré en mémoire non volatile, l'indice $IC_T$ de ce terminal est alors égal à 65. L'indice $IC_T$ est associé à chaque identifiant du terminal stocké en base de données et accessible au serveur de mots de contrôle.

La figure 4 représente un exemple de structure possible pour la table 116. Cette table 116 associe à chaque identifiant $i$ de canal un indice de confiance $IC_c$ représentatif de la probabilité que le contenu multimédia soit victime d'une tentative d'attaque. Cet indice $IC_c$ représente aussi l'importance des conséquences dommageables si la sécurité des mots de contrôle pour déchiffrer ce canal $i$ était compromise. Cet indice $IC_c$ est donc également représentatif de la probabilité que la sécurité des mots de contrôle stockés dans un terminal soit compromise. En effet, plus l'intérêt à désembrouiller illégalement un contenu multimédia est faible, plus la probabilité est faible que la sécurité des mots de contrôle permettant de désembrouiller ce contenu multimédia soit compromise. Par exemple, il n'y a aucun intérêt à compromettre la sécurité de mots de contrôle permettant de désembrouiller un canal diffusé gratuitement, c'est-à-dire qui peut être visualisé en clair sans qu'un abonnement payant soit souscrit pour cela. Au contraire, l'intérêt pour désembrouiller illicitement un contenu multimédia augmente avec la valeur de ce contenu multimédia. Par exemple, un canal sur lequel sont diffusés des films récents est associé à un indice $IC_c$ faible puisque le risque que la sécurité des mots de contrôle permettant de le désembrouiller soit compromise est plus important.

Ici, la table 116 comporte deux colonnes. Chaque ligne de cette table 116 comprend un champ contenant l'identifiant $i$ et un champ associant à cet identifiant $i$ une valeur de l'indice $IC_c$. La table 116 est par exemple fournie par un opérateur du système 2.

Le fonctionnement du système 2 va maintenant être décrit plus en détail en regard du procédé de la figure 5.

Initialement, lors d'une étape 120, le dispositif 6 diffuse plusieurs contenus multimédias différents simultanément sur différents canaux. Sur chaque canal, la cryptopériode t et la cryptopériode suivante t+1 sont embrouillées avec les mots de contrôle, respectivement, $CW_{i,t}$ et $CW_{i,t+1}$. Les messages ECM contenant les cryptogrammes $CW^*_{i,t}$ et $CW^*_{i,t+1}$ des mots de contrôle $CW_{i,t}$ et $CW_{i,t+1}$ sont multiplexés avec les contenus multimédias diffusés. Ce multiplexage permet de synchroniser la diffusion des mots de contrôle avec la diffusion des contenus multimédias. Ici, les cryptogrammes $CW^*_{i,t}$ et $CW^*_{i,t+1}$ sont transmis aux terminaux pendant la cryptopériode t-1 précédent la cryptopériode t.

Typiquement, les messages ECM sont répétés plusieurs fois au sein d'une même cryptopériode. Par exemple, les messages ECM sont répétés toutes les 0,1 seconde à 0,5 seconde. La durée d'une cryptopériode est supérieure à cinq secondes et, de préférence, comprise entre 5 secondes et 10 minutes.

Les contenus multimédias embrouillés sont reçus sensiblement en même temps par chacun des terminaux 10 à 12. Les étapes suivantes sont donc exécutées sensiblement en parallèle pour chacun de ces terminaux. Les étapes suivantes sont décrites dans le cas particulier du terminal 10.

Lors d'une étape 122, les contenus multimédias embrouillés avec des messages ECM sont reçus par le terminal 70.

Ensuite, lors d'une étape 124, le démultiplexeur 72 extrait le contenu multimédia embrouillé correspondant au canal $i$ dont le désembrouillage est actuellement demandé par l'utilisateur. Lors de l'étape 124, le démultiplexeur 72 extrait également uniquement les messages ECM contenant les cryptogrammes des mots de contrôle permettant de désembrouiller ce même canal. Le multiplexeur 72 transmet le contenu multimédia extrait vers le désembrouilleur 74. Les messages ECM extraits sont quant à eux transmis au processeur 76.

Lors d'une étape 126, le processeur 76 recherche dans la table 79 si celle-ci contient déjà le mot de contrôle $CW_{i,t}$ de la prochaine cryptopériode à désembrouiller du canal i.

Dans l'affirmative, le processeur 76 procède à une phase 127 de désembrouillage de la cryptopériode t diffusé sur le canal i.

Plus précisément, lors d'une étape 128, le processeur 76 envoie au désembrouilleur 74 le mot de contrôle $CW_{i,t}$ trouvé dans la table 79. Aucune requête pour déchiffrer les cryptogrammes $CW^*_{i,t}$ et $CW^*_{i,t+1}$ n'est alors transmise au serveur 106.

Ensuite, lors d'une étape 130, le désembrouilleur 74 désembrouille la cryptopériode t du contenu multimédia reçu à l'aide de ce mot de contrôle $CW_{i,t}$.

Puis, lors d'une étape 132, le contenu multimédia désembrouillé est décodé par le décodeur 80 puis transmis à la carte vidéo 82.

Enfin, lors d'une étape 134, la carte vidéo 82 transmet le signal vidéo au dispositif d'affichage 84 pour que le contenu multimédia s'affiche sur l'écran 86 de manière directement perceptible et compréhensible par un être humain.

Si le mot de contrôle $CW_{i,t}$ n'est pas contenu dans la table 79, lors d'une étape 140, le terminal 10 transmet au cours de la cryptopériode t-1 une requête vers le serveur 106 pour déchiffrer les cryptogrammes $CW^*_{i,t}$ et $CW^*_{i,t+1}$ contenu dans le message ECM reçu. Par exemple, cette requête contient :

- le message ECM reçu et donc la paire de cryptogrammes $CW^*_{i,t}/CW^*_{i,t+1}$, et
- un identifiant $Id_u$ de l'utilisateur du terminal ayant envoyé la requête.

Cette requête est transmise au serveur 106 par l'intermédiaire de l'émetteur 88 et du réseau 92. Tous les échanges d'informations entre le terminal 10 et le serveur 106 se font par l'intermédiaire d'un tunnel sécurisé établi au travers du réseau 92. L'établissement du tunnel a requis l'authentification et l'identification du terminal par le serveur 106, par exemple, à l'aide du certificat cryptographique contenu dans la mémoire 78. Ainsi, le serveur 106 dispose de l'identifiant $Id_T$ du terminal qui lui envoie une requête.

Lors d'une étape 142, en réponse à la réception de cette requête, le module 108 extrait de la base 102 les titres d'accès associés à l'identifiant $Id_u$ contenu dans cette requête. Puis le module 108 compare les titres d'accès extraits aux conditions d'accès CA contenues dans la requête.

Si les titres d'accès de l'utilisateur ne correspondent pas aux conditions d'accès CA alors le serveur 106 procède à une étape 144 d'inhibition du désembrouillage du canal i par le terminal 10. Par exemple, à cet effet, le serveur 106 ne transmet aucun mot de contrôle au terminal 10.

Dans le cas contraire, le serveur 106 procède à une étape 146 de mise à jour d'un profil de l'utilisateur. Le profil de l'utilisateur contient des informations qui permettent de déterminer la durée probable pendant laquelle l'utilisateur du terminal 10 va continuer à désembrouiller le même canal i. Ce profil utilisateur permet donc de déterminer le nombre probable de cryptopériodes successives du canal i qui seront désembrouillées.

Cette probabilité dépend notamment des habitudes de l'utilisateur du terminal 10. A cet effet, lors de l'étape 146, le serveur 106 détecte si la requête reçue demande le désembrouillage de mots de contrôle pour un nouveau canal. Dans l'affirmatif, cela signifie que l'utilisateur a changé de canal. Dans ce cas, il enregistre dans une base de données l'instant auquel l'utilisateur a quitté l'ancien canal et l'instant auquel l'utilisateur a basculé sur le nouveau canal. Le serveur 106 enregistre également l'identifiant i du nouveau canal sur lequel a basculé l'utilisateur. Les informations enregistrées dans cette base de données permettent donc d'estimer le nombre de cryptopériodes successives que l'utilisateur du terminal 10 va visualiser.

De préférence, les données enregistrées dans cette base de données sont conservées pendant une durée très grande de manière à affiner la probabilité calculée à partir des données enregistrées dans cette base de données.

De plus, lors de l'étape 146, le serveur 106 construit un indice de fiabilité de ce profil d'utilisateur. Cet indice de fiabilité indique le degré de confiance que l'on peut avoir dans le profil d'utilisateur actuellement enregistré. Par exemple, pour cela, le serveur 106 calcule les écarts entre les mêmes probabilités calculées à l'aide du profil utilisateur actuel et à l'aide des informations contenues dans cette même base de données quelques temps auparavant. Plus cet écart est important, plus l'indice de fiabilité est faible. En effet, cela signifie que le profil utilisateur n'est pas stable et qu'il n'est donc pas possible d'y accorder un grand degré de confiance.

Ensuite, lors d'une étape 148, le serveur 106 construit l'indice $IC_T$ du terminal 10. A cet effet, il extrait la valeur de cet indice $IC_T$ de la table 114 à partir de l'identifiant $Id_T$ du terminal 10 reçu, par exemple, lors de l'authentification du terminal pendant la phase d'établissement du tunnel sécurisé.

Lors d'une étape 150, le serveur 106 construit un indice de confiance $IC_u$ sur l'utilisation du terminal. Cet indice $IC_u$ représente la probabilité que le terminal soit actuellement soumis à une attaque visant à compromettre la sécurité des mots de contrôle stockés dans celui-ci. Cet indice $IC_u$ est donc également représentatif de la probabilité que la sécurité des mots de contrôle stockés dans ce terminal soit compromise.

La valeur de cet indice $IC_u$ pour un terminal donné est construite à partir des valeurs des compteurs d'erreur $C_1$ à $C_4$.

Plus précisément, lors d'une opération 152, à chaque fois qu'une requête est transmise par le terminal 10, les compteurs d'erreurs $C_1$ à $C_4$ sont mis à jour.

Ici, le compteur $C_1$ représente le nombre de changements de canal par heure.

Le compteur $C_2$ représente le nombre de requêtes identiques envoyées par le terminal 10 au serveur 106 par minute. En effet, lors d'un fonctionnement normal, chaque requête transmise par le terminal 10 au serveur 106 doit être différente de la précédente. Ainsi, la réception de plusieurs requêtes identiques permet de soupçonner une utilisation anormale du terminal 10 et donc une éventuelle tentative de compromission de la sécurité des mots de contrôle stockés dans ce terminal.

Le compteur $C_3$ dénombre le nombre de fois où l'intégrité du message ECM reçu dans la requête n'a pas pu être vérifiée par 24 heures. L'intégrité du message ECM d'une requête est vérifiée lorsque la signature appliquée aux différents champs du message ECM permet de retrouver la signature MAC contenue dans ce message. Dans le cas contraire, cela signifie que le message ECM a été corrompu.

Enfin, le compteur $C_4$ dénombre le nombre de messages ECM ayant une syntaxe incorrecte transmis par le terminal 10 au serveur 106 par 24 heures.

Ensuite, lors d'une opération 154, la valeur de chacun de ces compteurs $C_1$ à $C_4$ est convertie en une note d'autant plus faible que le fonctionnement actuel du terminal est anormal. Par exemple, des tables de conversion des valeurs des compteurs en note sont utilisées. A titre d'illustration, les tables suivantes sont utilisées.

| Nombre de changements de canal par heure | Note_NBZ |
|---|---|
| Inférieur à 100 | 100 |
| Compris entre 100 et 360 | 50 |
| Compris entre 360 et 450 | 20 |
| Supérieur à 450 | 0 |

| Nombre de requêtes identiques par minute | Note_NBR |
|---|---|
| Egal à 0 | 100 |
| Compris entre 1 et 2 | 50 |
| Strictement supérieur à 2 | 0 |

| Nombre de messages ECM corrompus par 24 heures | Note_NBA |
|---|---|
| Egal à 0 | 100 |
| Supérieur ou égal à 1 et strictement inférieur à 4 | 50 |
| Supérieur ou égal à 4 | 0 |

| Nombre d'erreurs de syntaxe par 24 heures | Note_NBE |
|---|---|
| Egal à 0 | 100 |
| Supérieur ou égal à 2 et strictement inférieur à 6 | 50 |
| Supérieur ou égal à 6 | 0 |

Lors d'une opération 156, la valeur de l'indice $IC_u$ est calculée en fonction de la valeur des compteurs $C_1$ à $C_4$ convertie en une note. Par exemple, la valeur de l'indice $IC_u$ est déterminée à l'aide de la relation suivante :

$$IC_u = \min \{note\_NBZ, note\_NBR, note\_NBA, note\_NBE\}$$

où « min » est la fonction qui retourne le minimum des différentes valeurs contenues entre les accolades.

La valeur de l'indicateur $IC_u$ peut également être calculée à l'aide d'autres relations. Par exemple, la relation suivante peut également être utilisée

$$IC_u = (note\_NBZ + note\_NBR + note\_NBA + note\_NBE)/4$$

Lors d'une étape 160, le serveur 106 construit l'indice $IC_c$ associé au canal i actuellement désembrouillé par le terminal 10. A cet effet, il extrait l'indice $IC_c$ associé à cette identifiant i dans la table 116.

Lors de l'étape 164, le serveur 106 détermine un nombre NbCP de mots de contrôle à transmettre au terminal 10 en réponse à sa requête. Ce nombre NbCP peut être supérieur à deux ce qui signifie qu'en plus des mots de contrôle absents $CW_{i,t}$ et $CW_{i,t+1}$ requis par le terminal 10, le serveur 106 peut également lui transmettre des mots de contrôle supplémentaires $CW_s$ permettant de désembrouiller des cryptopériodes supplémentaires du canal i sans même que le terminal 10 n'ai transmis au serveur 106 les cryptogrammes correspondants à ces mots de contrôle supplémentaires $CW_s$.

Le nombre NbCP est choisi d'autant plus grand que la probabilité est faible que la sécurité des mots de contrôle supplémentaires transmis à ce terminal 10 soit compromise. A cet effet, le nombre NbCP est déterminé en fonction des indices de confiance $IC_T$, $IC_u$ et $IC_c$ précédemment construits.

Par exemple, lors d'une opération 166, un nombre maximal NbMaxCP de mots de contrôle à transmettre au terminal 10 est d'abord calculé en fonction des indices $IC_T$, $IC_u$ et $IC_c$. Ici, la valeur de ce nombre maximal NbMaxCP est calculée à l'aide du tableau suivant :

| Seuil pour l'indice $IC_T$ | Seuil pour l'indice $IC_u$ | Seuil pour l'indice $IC_c$ | Valeur de NbMaxCP |
|---|---|---|---|
| 0 | 0 | 0 | 0 |
| 65 | 60 | 0 | 1 |
| 20 | 50 | 50 | 1 |
| 65 | 50 | 50 | 5 |
| 20 | 50 | 100 | 5 |
| 65 | 50 | 100 | 10 |

La valeur du nombre NbMaxCP retenue est la valeur maximale dans la colonne de droite du tableau ci-dessus pour laquelle les indices $IC_T$, $IC_u$ et $IC_c$ dépassent chacun la valeur d'un seuil respectif indiqué sur la même ligne. Par exemple, si les valeurs construites des indices $IC_T$, $IC_u$ et $IC_c$ sont respectivement 70, 54 et 100, la valeur du nombre NbMAxCP est égale à dix.

Ensuite, lors d'une opération 168, le nombre NbMaxCP est ajusté en fonction du profil de l'utilisateur déterminé lors de l'étape 146. Typiquement, la valeur du nombre NbMaxCP est diminuée si la probabilité que l'utilisateur reste sur le canal i pendant NbMaxCP cryptopériodes successives est inférieure à un seuil prédéterminé.

Ensuite, lors d'une opération 170, la valeur du nombre NbMaxCP est comparée à zéro. Si la valeur de ce nombre est nulle, alors le serveur 106 inhibe le désembrouillage des cryptopériodes suivantes du canal i. Pour cela, il procède à l'étape 144.

Dans le cas contraire, le nombre NbCP est temporairement pris égal au nombre NbMaxCP.

Puis, lors d'une opération 172, le nombre NbCP est ajusté de manière à répartir le plus uniformément possible la charge de travail du serveur 106 sur chacune des prochaines cryptopériodes. Pour cela, ici, le serveur 106 ajuste la valeur du nombre NbCP en fonction :

- d'estimations de la charge de travail du serveur 106 sur chacune des cryptopériodes à venir, et
- d'une loi délivrant la valeur finale du nombre NbCP de mots de contrôle à transmettre permettant de répartir plus uniformément la charge de travail du serveur 106 sur chacune des cryptopériodes à venir.

Ici, la charge de travail du serveur 106 est mesurée par le nombre probable de requêtes à traiter par ce serveur 106 pendant une même cryptopériode.

A titre d'illustration, les estimations de la charge de travail pour les dix prochaines cryptopériodes à venir sont stockées dans une table de charge de travail. Un exemple d'une telle table est donné ci-dessous.

| N° de la cryptopériode / Identifiant du canal | t | t+1 | t+2 | t+3 | t+4 | t+5 | t+6 | t+7 | t+8 | t+9 |
|---|---|---|---|---|---|---|---|---|---|---|
| 1 | 11000 | 8464 | 8891 | 6712 | 5998 | 11865 | 8011 | 7776 | 8612 | 12567 |
| 2 | 12007 | 6801 | 11128 | 10218 | 9996 | 9857 | 6850 | 6880 | 7589 | 8359 |
| 3 | ... | ... | ... | ... | ... | ... | ... | ... | ... | ... |
| i | 22963 | 21117 | 22546 | 22989 | 23151 | 17896 | 15069 | 15033 | 15077 | 14211 |
| N | 880 | 891 | 765 | 610 | 877 | 880 | 910 | 898 | 961 | 499 |

Ici, la loi qui délivre la valeur finale du nombre NbCP est construite pour optimiser les deux critères suivants :

1) NbCP doit être égal ou le plus proche possible de sa valeur maximale NbMaxCP, et
2) la valeur du nombre NbCP doit permettre de répartir plus uniformément la charge de travail du serveur 106 sur chacune des dix prochaines cryptopériodes à venir.

Par exemple, la loi utilisée est la suivante :

$$NbCP = Min\{Load_i(j)*K^{(NbMaxCP-j)}\}$$

où :

- Load(j) est la charge de travail du serveur 106 pendant la cryptopériode j pour le désembrouillage du canal $i$ ;
- K est une constante strictement supérieure à 1 ;
- j est un nombre entier variant de t à NbMaxCP.

Par exemple, à l'aide de cette loi et à l'aide des valeurs contenues dans le tableau précédent, dans le cas où le canal $i$ est le deuxième, la valeur de NbCP est égale à 8 si la constante K est égale à 1,1 et NbMaxCP est égal à 10.

Enfin, plus la constante K est proche de 1 plus l'on autorise la nombre NbCP ajusté à être éloigné de la valeur du nombre NbMaxCP.

Une fois le nombre NbCP déterminé, l'estimation de la charge de travail du serveur 106 est mis à jour lors d'une étape 174. Pour cela, les deux hypothèses suivantes sont faîtes:

1) l'utilisateur ne change pas de canal, et
2) la prochaine requête est transmise par le terminal pendant la cryptopériode qui précède la cryptopériode pour laquelle aucun mot de contrôle ne lui a été transmis.

Par conséquent, avec ces hypothèses, la prochaine requête transmise par le terminal 10 se situe pendant la cryptopériode t+NbCp-2. On incrémente donc la valeur de l'estimation de la charge de travail du serveur 106 pour le canal i pendant la cryptopériode t+NbCP-2 d'un pas prédéterminé. Par exemple le pas est typiquement égal à un. Cette valeur est mémorisée dans la table de charge de travail décrite précédemment.

Lors de l'étape 174, à la fin de la cryptopériode courante t-1, la colonne correspondant à la cryptopériode t est effacée de la table de charge de travail et les colonnes correspondant aux cryptopériodes t+1 à t+9 sont décalées d'une colonne vers la gauche. Ceci libère une colonne vierge pour la nouvelle cryptopériode t+9.

Ensuite, lors d'une étape 176, les mots de contrôle nécessaires pour désembrouiller les cryptopériodes successives t à t+NbCP-1 sont extraits de la table 112.

Lors d'une étape 178, les NbCP mots de contrôle extraits sont transmis au terminal 10 pour que celui-ci puisse désembrouiller les NbCP prochaines cryptopériodes du canal $i$ sans avoir à envoyer une requête vers le serveur 106. Cela permet donc de diminuer la charge de travail du serveur 106 puisque la fréquence des requêtes diminue au moins pour certains terminaux. Toutefois, la sécurité du système 2 n'est pas compromise puisque seuls les terminaux où la probabilité est faible que la sécurité des mots de contrôle transmis soit compromise bénéficient de la réception de mots de contrôle supplémentaires.

Lors de l'étape 178, éventuellement, le serveur 106 transmet également des mots de contrôle pour d'autres canaux que le canal $i$. Cela permet notamment d'accélérer le désembrouillage du nouveau canal après le basculement du précédent canal vers ce nouveau canal. Cela permet également de diminuer la charge de travail du serveur 106 puisqu'en réponse à un changement de canal, le terminal n'envoie pas nécessairement une nouvelle requête vers le serveur de mots de contrôle. Le nombre de mots de contrôle pour les autres canaux que le canal $i$ transmis lors de l'étape 178 est par exemple déterminé de la même façon que ce qui a été décrit pour le canal $i$ ou par un autre procédé.

Enfin, lors d'une étape 180, le terminal 10 reçoit les nouveaux mots de contrôle et les enregistre dans la table 79 pour pouvoir les utiliser pour désembrouiller les cryptopériodes suivantes du canal $i$.

Pour mettre en oeuvre le procédé de la figure 5, la table 112 doit être mise à jour en permanence pour que celle-ci contienne par avance les mots de contrôle nécessaires au désembrouillage des cryptopériodes à venir de chacun des canaux. Pour cela, le procédé de la figure 6 est mis en oeuvre. Lors d'une étape 190, le générateur 32 de mots de contrôle génère par avance les mots de contrôle qui seront utilisés pour embrouiller les cryptopériodes à venir des contenus multimédias diffusés. Par exemple, le générateur 32 génère par avance entre deux et 100 mots de contrôle et, de préférence, entre 10 et 30 mots de contrôle.

Lors d'une étape 192, ces mots de contrôle sont transmis au serveur 106 qui les enregistre dans la table 112 de manière à ce que celle-ci contienne toujours les mots de contrôle nécessaires au désembrouillage des cryptopériodes t, t+1, t+2, ... etc. Par exemple, ces mots de contrôle sont transmis au serveur 106 par l'intermédiaire d'une liaison sécurisée reliant directement le dispositif 6 à la tête de réseau 90.

Lors d'une étape 194, le serveur 106 met à jour la table 112 à l'aide des mots de contrôle supplémentaires reçus. De façon à permettre la visualisation de contenus multimédias délinéarisés, le serveur 106 conserve également dans la table 112 les enregistrements correspondants aux cryptopériodes passées.

De nombreux autres modes de réalisation sont possibles. Par exemple, d'autres indices de confiance que ceux décrits ici peuvent être utilisés pour estimer la probabilité que la sécurité des mots de contrôle stockés dans un terminal donné soit compromise. De même, d'autres modes de calcul des indices de confiance $IC_T$, $IC_u$ et $IC_c$ peuvent être mis en oeuvre. Par exemple, la valeur de l'indice $IC_c$ peut être calculée en fonction d'une mesure de l'audience actuelle du canal i désembrouillé par le terminal et non pas, comme décrit précédemment, à partir de valeurs prédéterminées enregistrées dans la table 116.

Le nombre NbCP peut être déterminé à partir d'un seul ou de seulement deux des indices $IC_T$, $IC_u$ et $IC_c$.

De façon similaire, d'autres modes de calcul du nombre NbCP sont possibles. Par exemple, le nombre NbMaxCP peut être obtenu à partir d'autres formules telles que par exemple à l'aide de la relation suivante :

$$NbMaxCP = E(10 \times (IC_T + IC_u + IC_c)/300)$$

où E est la fonction partie entière.

Dans un autre mode de réalisation, le profil d'utilisateur n'est pas utilisé pour déterminer le nombre NbCP.

Il existe également d'autres méthodes d'ajustement du nombre NbCP pour répartir la charge de travail du serveur 106. Par exemple, pour répartir la charge de travail sur différentes cryptopériodes, il n'est pas nécessaire d'estimer la charge de travail sur chacune de ces cryptopériodes. Par exemple, l'ajustement du nombre NbCP consiste à tirer de façon aléatoire ou pseudo-aléatoire un nombre compris entre 1 et NbMaxCP.

L'estimation de la charge de travail prise en compte pour l'ajustement du nombre NbCP peut être l'estimation d'une charge de travail globale pour l'ensemble des canaux et non pas comme décrit précédemment une estimation canal par canal. Par exemple, la charge globale pendant une cryptopériode est obtenue en sommant les charges de travail du serveur 106 pour chacun des canaux i pendant la même cryptopériode.

Le cryptogramme du ou des mots de contrôle contenus dans la requête transmise au serveur 106 par le terminal peut être l'identifiant du canal à désembrouiller ainsi que le numéro ou l'étiquette de temps de la prochaine cryptopériode sur ce canal à désembrouiller. Dans un tel mode de réalisation, il n'est alors pas nécessaire que la requête transmise contienne en plus un cryptogramme du mot de contrôle $CW_{i,t}$ obtenu en chiffrant ce mot de contrôle à l'aide d'une clé secrète. En effet, l'identifiant du canal et le numéro de la prochaine cryptopériode sont suffisants à eux seuls pour que le serveur 106 retrouve dans la table 112 le mot de contrôle à envoyer au terminal en réponse à cette requête.

La mise à jour du profil de l'utilisateur peut être réalisée différemment. En particulier, dans un autre mode de réalisation, c'est le terminal qui détecte les changements de canaux et qui envoie, à chaque changement de canal, une information correspondante au serveur 106 pour que celui-ci puisse mettre à jour le profil de l'utilisateur de ce terminal. Dans ce cas, il est possible de tenir compte des changements de canaux même si ceux-ci ne sont pas associés à la transmission immédiate d'une nouvelle requête vers le serveur 106. En effet, le mot de contrôle permettant de désembrouiller le nouveau canal peut déjà avoir été reçu par avance et être déjà stocké dans la table 79.

Ici, les tables 112, 114 et 116 ainsi que les compteurs $C_1$ à $C_4$ ont été représentés comme étant contenus dans la mémoire 110. Toutefois, ces tables peuvent être contenues ailleurs dans le système 2 et, par exemple, dans une mémoire interrogeable à distance, par le serveur 106.

Dans un autre mode de réalisation, les mots de contrôle transmis du serveur vers le terminal sont transmis sous forme chiffrée de manière à ce que seul le terminal destinataire de ce mot de contrôle puisse déchiffrer ces mots de contrôle. Dans un tel cas, la mise en oeuvre d'un tunnel sécurisé peut être omise.

Dans une variante du système 2, le mot de contrôle $CW_{i,t}$ est transmis pendant la cryptopériode t et non pas pendant la cryptopériode t-1.

Ce qui a été décrit s'applique aussi bien aux contenus multimédias linéarisés qu'aux contenus multimédias délinéarisés.

## Revendications

**1.** Procédé de déchiffrement de mots de contrôle pour des terminaux mécaniquement et électroniquement indépendants les uns des autres, dans lequel :

- en réponse à l'absence, dans l'un quelconque des terminaux, d'un ou plusieurs mots de contrôle $CW_c$ pour désembrouiller une ou plusieurs cryptopériodes d'un contenu multimédia, ce terminal transmet (140) à un serveur de mots de contrôle une requête contenant le ou les cryptogrammes d'un ou plusieurs des mots de contrôle absents, et en réponse
- le serveur de mots de contrôle transmet (178) à ce terminal le ou les mots de contrôle absents,

**caractérisé en ce que** le serveur de mots de contrôle :

- détermine (164), sélectivement pour chaque terminal, un nombre de mots de contrôle supplémentaires $CW_s$ à transmettre au terminal en fonction de la probabilité que la sécurité de ces mots de contrôle supplémentaires soit compromise, sur la base d'un indice de confiance pour ledit terminal, et
- transmet (178) vers ce terminal, en plus des mots de contrôle absents $CW_c$, le nombre déterminé de mots de contrôle supplémentaires $CW_s$ pour permettre au terminal de désembrouiller des cryptopériodes supplémentaires du contenu multimédia en plus des cryptopériodes désembrouillables à l'aide des mots de contrôle absents $CW_c$ requis.

2. Procédé de transmission de mots de contrôle à des terminaux mécaniquement et électroniquement indépendants les uns des autres pour la mise en oeuvre d'un procédé conforme à la revendication 1, ce procédé comportant :

- la transmission (178) à l'un quelconque de ces terminaux d'un ou plusieurs mots de contrôle absents $CW_c$ en réponse à une requête de ce terminal contenant le ou les cryptogrammes des mots de contrôle absents,

**caractérisé en ce que** le procédé comprend également :

- la détermination (164), sélectivement pour chaque terminal, d'un nombre de mots de contrôle supplémentaires $CW_s$ à transmettre au terminal en fonction de la probabilité que la sécurité de ces mots de contrôle supplémentaires soit compromise, sur la base d'un indice de confiance pour ledit terminal, et
- la transmission (178) vers ce terminal, en plus des mots de contrôle absents $CW_c$, du nombre déterminé de mots de contrôle supplémentaires $CW_s$ pour permettre au terminal de désembrouiller des cryptopériodes supplémentaires du contenu multimédia en plus des cryptopériodes désembrouillables à l'aide des mots de contrôle absents $CW_c$ requis.

3. Procédé selon la revendication 2, dans lequel le nombre de mots de contrôle supplémentaires est ajusté (172) en fonction :

- d'estimations du nombre de requêtes à traiter par le serveur de mots de contrôle pendant plusieurs cryptopériodes à venir, et
- d'une loi délivrant le nombre de mots de contrôle supplémentaires à transmettre permettant de répartir plus uniformément sur les cryptopériodes à venir le nombre de requêtes à traiter par le serveur de mots de contrôle pendant chacune de ces cryptopériodes à venir en fonction desdites estimations.

4. Procédé selon la revendication 3, dans lequel le serveur de mots de contrôle estime (174) le nombre de requêtes à traiter au cours d'une cryptopériode à venir à partir du nombre de mots de contrôle supplémentaires transmis aux terminaux par ce serveur au cours des cryptopériodes passées et de la cryptopériode présente.

5. Procédé selon la revendication 2, dans lequel le nombre de mots de contrôle supplémentaires est déterminé en fonction d'un nombre aléatoire tiré, de façon aléatoire ou pseudo-aléatoire, dans une plage de nombres dont l'étendue est fonction de la probabilité que la sécurité des mots de contrôle stockés dans le terminal soit compromise.

6. Procédé selon l'une quelconque des revendications 2 à 5, dans lequel le nombre de mots de contrôle supplémentaires $CW_s$ est également ajusté (168) en fonction du nombre probable de cryptopériodes successives de ce contenu multimédia qui seront désembrouillées par ce terminal.

7. Procédé selon l'une quelconque des revendications 2 à 6, dans lequel la probabilité que la sécurité des mots de contrôle supplémentaires $CW_s$ soit compromise est fonction d'un identifiant du terminal et/ou d'un compteur d'erreur de fonctionnement de ce terminal et/ou d'un identifiant du contenu multimédia.

**8.** Procédé de réception de mots de contrôle par un terminal pour la mise en oeuvre d'un procédé conforme à la revendication 1, dans lequel en réponse à l'absence dans ce terminal d'un ou plusieurs mots de contrôle $CW_C$ pour désembrouiller une ou plusieurs cryptopériodes d'un contenu multimédia, ce terminal transmet (140) au serveur de mots de contrôle une requête contenant le ou les cryptogrammes d'un ou plusieurs mots de contrôle absents, **caractérisé en ce que** le terminal reçoit (180), en plus des mots de contrôle absents requis, un nombre déterminé de mots de contrôle supplémentaires pour permettre à ce terminal de désembrouiller des cryptopériodes supplémentaires du même contenu multimédia en plus des cryptopériodes désembrouillables à l'aide des mots de contrôle absents $CW_C$ requis.

**9.** Support d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

**10.** Serveur de mots de contrôle vers des terminaux mécaniquement et électroniquement indépendants les uns des autres, pour la mise en oeuvre d'un procédé conforme à la revendication 1, ce serveur (106) étant apte à transmettre à l'un quelconque des terminaux un ou plusieurs mots de contrôle absents $CW_C$ en réponse à une requête de ce terminal contenant le ou les cryptogrammes du ou des mots de contrôle absents, **caractérisé en ce que** le serveur (106) de mots de contrôle est également apte :

- à déterminer, sélectivement pour chaque terminal, un nombre de mots de contrôle supplémentaires $CW_S$ à transmettre au terminal en fonction de la probabilité que la sécurité de ces mots de contrôle supplémentaires soit compromise, sur la base d'un indice de confiance pour ledit terminal, et
- à transmettre vers ce terminal, en plus des mots de contrôle absents $CW_C$, le nombre déterminé de mots de contrôle supplémentaires $CW_S$ pour permettre au terminal de désembrouiller des cryptopériodes supplémentaires du contenu multimédia en plus des cryptopériodes désembrouillables à l'aide des mots de contrôle absents $CW_C$ requis.

**Patentansprüche**

**1.** Verfahren zur Entschlüsselung von Steuerwörtern für Endgeräte, die mechanisch und elektronisch voneinander unabhängig sind, wobei:

- dieses Endgerät als Antwort auf die Abwesenheit in einem beliebigen der Endgeräte von einem oder mehreren Steuerwörtern $CW_C$ zum Entscrambeln von einer oder mehreren Kryptoperioden eines Multimedia-Inhalts, eine Anfrage, die das oder die Kryptogramme von einem oder mehreren der fehlenden Steuerwörter enthält, an einen Server von Steuerwörtern sendet (140), und als Antwort
- der Server von Steuerwörtern an dieses Endgerät das oder die fehlenden Steuerwörter sendet (178),

**dadurch gekennzeichnet, dass** der Server von Steuerwörtern:

- selektiv für jedes Endgerät eine Anzahl an zusätzlichen Steuerwörtern $CW_S$, die an das Endgerät zu senden sind, in Abhängigkeit von der Wahrscheinlichkeit, dass die Sicherheit dieser zusätzlichen Steuerwörter gefährdet ist, auf der Grundlage eines Vertrauensindexes für das Endgerät bestimmt (164) und
- zu diesem Endgerät zusätzlich zu den fehlenden Steuerwörtern $CW_C$ die bestimmte Anzahl an zusätzlichen Steuerwörtern $CW_S$ sendet (178), um dem Endgerät zu ermöglichen, zusätzliche Kryptoperioden des Multimedia-Inhalts zusätzlich zu den Kryptoperioden, die mit Hilfe der angeforderten fehlenden Steuerwörter $CW_C$ entscrambelt werden können, zu entscrambeln.

**2.** Verfahren zum Senden von Steuerwörtern an Endgeräte, die mechanisch und elektronisch voneinander unabhängig sind, um ein Verfahren nach dem Anspruch 1 umzusetzen, wobei dieses Verfahren Folgendes aufweist:

- das Senden (178) an ein beliebiges dieser Endgeräte von einem oder mehreren Steuerwörtern $CW_C$ als Antwort auf eine Anfrage von diesem Endgerät, die das oder die Kryptogramme von fehlenden Steuerwörter enthält,

**dadurch gekennzeichnet, dass** das Verfahren auch Folgendes aufweist:

- das Bestimmen (164), selektiv für jedes Endgerät, einer Anzahl an zusätzlichen Steuerwörtern $CW_S$, die an das Endgerät zu senden sind, in Abhängigkeit von der Wahrscheinlichkeit, dass die Sicherheit dieser zusätzlichen Steuerwörter gefährdet ist, auf der Grundlage eines Vertrauensindexes für das Endgerät und
- das Senden (178) zu diesem Endgerät zusätzlich zu den fehlenden Steuerwörtern $CW_C$ der bestimmten Anzahl an zusätzlichen Steuerwörtern $CW_S$, um dem Endgerät zu ermöglichen, zusätzliche Kryptoperioden des Multimedia-Inhalts zusätzlich zu den Kryptoperioden, die mit Hilfe der angeforderten fehlenden Steuerwörter $CW_C$ entscrambelt werden können, zu entscrambeln.

3. Verfahren nach Anspruch 2, wobei die Anzahl an zusätzlichen Steuerwörtern in Abhängigkeit von Folgendem angepasst (172) wird:

- von Schätzungen der Anzahl an Anfragen, die von dem Server von Steuerwörtern während mehrerer zukünftiger Kryptoperioden zu bearbeiten sind, und
- von einem Gesetz, dass die Anzahl an zusätzlichen Steuerwörtern, die zu senden sind, ausgibt, das ermöglicht, die Anzahl an Anfragen, die von dem Server von Steuerwörtern während jeder dieser zukünftigen Kryptoperioden in Abhängigkeit von den Schätzungen zu bearbeiten sind, gleichmäßiger auf den zukünftigen Kryptoperioden zu verteilen.

4. Verfahren nach Anspruch 3, wobei der Server von Steuerwörtern die Anzahl an Anfragen, die während einer zukünftigen Kryptoperiode zu bearbeiten sind, ausgehend von der Anzahl an zusätzlichen Steuerwörtern, die von diesem Server während der vergangenen Kryptoperioden oder der aktuellen Kryptoperiode an die Endgeräte gesendet werden, schätzt (174).

5. Verfahren nach Anspruch 2, wobei die Anzahl an zu bearbeiten Steuerwörtern in Abhängigkeit von einer Zufallszahl bestimmt wird, die zufällig oder pseudozufällig aus einem Bereich von Zahlen gezogen wird, dessen Ausmaß von der Wahrscheinlichkeit abhängt, dass die Sicherheit der Steuerwörter, die in dem Endgerät gespeichert werden, beeinträchtigt wird.

6. Verfahren nach einem der vorhergehenden Ansprüche 2 bis 5, wobei die Anzahl an zusätzlichen Steuerwörtern $CW_S$ in Abhängigkeit von der wahrscheinlichen Anzahl an sukzessiven Kryptoperioden dieses Multimedia-Inhalts, die von diesem Endgerät entscrambelt werden, ebenfalls angepasst wird (168).

7. Verfahren nach einem der vorhergehenden Ansprüche 2 bis 6, wobei die Wahrscheinlichkeit, dass die Sicherheit der zusätzlichen Steuerwörter $CW_S$ beeinträchtigt wird, von einer Kennung des Endgeräts und/oder einem Fehlerzähler des Betriebs dieses Endgeräts und/oder einer Kennung des Multimedia-Inhalts abhängt.

8. Verfahren zum Empfangen von Steuerwörtern durch ein Endgerät zum Umzusetzen eines Verfahrens gemäß Anspruch 1, wobei dieses Endgerät als Antwort auf die Abwesenheit in diesem Endgerät von einem oder mehreren Steuerwörtern $CW_C$ zum Entscrambeln von einer oder mehreren Kryptoperioden eines Multimedia-Inhalts, eine Anfrage, die das oder die Kryptogramme von einem oder mehreren der fehlenden Steuerwörter enthält, an den Server von Steuerwörtern sendet (140), **dadurch gekennzeichnet, dass** das Endgerät zusätzlich zu den angeforderten fehlenden Steuerwörtern eine bestimmte Anzahl an zusätzlichen Steuerwörtern empfängt (180), um diesem Endgerät zu ermöglichen, zusätzliche Kryptoperioden des gleichen Multimedia-Inhalts zusätzlich zu den Kryptoperioden, die mit Hilfe der angeforderten fehlenden Steuerwörter $CW_C$ entscrambelt werden können, zu entscrambeln.

9. Informationsaufzeichnungsmedium, **dadurch gekennzeichnet, dass** es Anweisungen für die Ausführung eines Verfahrens nach einem der vorhergehenden Ansprüche aufweist, wenn diese Anweisungen durch einen elektronischen Rechner ausgeführt werden.

10. Server von Steuerwörtern an Endgeräte, die mechanisch und elektronisch voneinander unabhängig sind, um ein Verfahren nach Anspruch 1 umzusetzen, wobei dieser Server (106) geeignet ist, an ein beliebiges dieser Endgeräte eines oder mehrere fehlende Steuerwörter $CW_C$ als Antwort auf eine Anfrage von diesem Endgerät, die das oder die Kryptogramme von dem oder den fehlenden Steuerwörtern enthält, zu senden, **dadurch gekennzeichnet, dass** der Server (106) von Steuerwörtern ebenfalls geeignet ist:

- selektiv für jedes Endgerät eine Anzahl an zusätzlichen Steuerwörtern $CW_S$, die an das Endgerät zu senden sind, in Abhängigkeit von der Wahrscheinlichkeit, dass die Sicherheit dieser zusätzlichen Steuerwörter gefährdet ist, auf der Grundlage eines Vertrauensindexes für das Endgerät zu bestimmen, und

- zu diesem Endgerät zusätzlich zu den fehlenden Steuerwörtern CW$_c$ die bestimmte Anzahl an zusätzlichen Steuerwörtern CW$_s$ zu senden, um dem Endgerät zu ermöglichen, zusätzliche Kryptoperioden des Multimedia-Inhalts zusätzlich zu den Kryptoperioden, die mit Hilfe der angeforderten fehlenden Steuerwörter CW$_c$ entscrambelt werden können, zu entscrambeln.

**Claims**

1. Method for deciphering control words for terminals that are mechanically and electronically independent of one another, in which:

   - in response to the absence, in any one of the terminals, of one or more control words CW$_C$ for descrambling one or more cryptoperiods of a multimedia content, this terminal transmits (140) a request containing the cryptogram(s) of one or more of the absent control words to a control word server, and, in response,
   - the control word server transmits (178) the absent control word(s) to this terminal,

   **characterized in that** the control word server:

   - determines (164), selectively for each terminal, a number of supplementary control words CW$_S$ to be transmitted to the terminal depending on the probability of the security of these supplementary control words being compromised, on the basis of a confidence index for said terminal,
   - transmits (178) to this terminal, in addition to the absent control words CW$_C$, the determined number of supplementary control words CW$_s$ in order to allow the terminal to descramble supplementary cryptoperiods of the multimedia content in addition to the cryptoperiods descrambleable using the requested absent control words CW$_C$.

2. Method for transmitting control words to terminals that are mechanically and electronically independent of one another in order to implement a method according to Claim 1, this method involving:

   - the transmission (178) of one or more absent control words CW$_C$ to any one of these terminals in response to a request from this terminal containing the cryptogram(s) of the absent control words,

   **characterized in that** the method also comprises:

   - the determination (164), selectively for each terminal, of a number of supplementary control words CW$_S$ to be transmitted to the terminal depending on the probability of the security of these supplementary control words being compromised, on the basis of a confidence index for said terminal, and
   - the transmission (178) to this terminal, in addition to the absent control words CW$_C$, of the determined number of supplementary control words CW$_s$ in order to allow the terminal to descramble supplementary cryptoperiods of the multimedia content in addition to the cryptoperiods descrambleable using the requested absent control words CW$_C$.

3. Method according to Claim 2, in which the number of supplementary control words is adjusted (172) depending:

   - on estimates of the number of requests to be processed by the control word server during multiple future crytoperiods, and
   - on a rule giving the number of supplementary control words to be transmitted allowing more uniform distribution over future cryptoperiods of the number of requests to be processed by the control word server during each of these future cryptoperiods depending on said estimates.

4. Method according to Claim 3, in which the control word server estimates (174) the number of requests to be processed in the course of a future cryptoperiod from the number of supplementary control words transmitted to the terminals by this server in the course of past cryptoperiods and the present cryptoperiod.

5. Method according to Claim 1, in which the number of supplementary control words is determined depending on a random number drawn, in random or pseudo-random fashion, from a range of numbers whose extent is dependent on the probability of the security of the control words stored in the terminal being compromised.

**6.** Method according to any one of Claims 2 to 5, in which the number of supplementary controls words $CW_s$ is also adjusted (168) depending on the probable number of successive cryptoperiods of this multimedia content that will be descrambled by this terminal.

**7.** Method according to any one of Claims 2 to 6, in which the probability of the security of the supplementary control words $CW_s$ being compromised is dependent on an identifier of the terminal and/or an operating error counter of this terminal and/or an identifier of the multimedia content.

**8.** Method for receiving control words using a terminal in order to implement a method according to Claim 1, in which, in response to the absence from this terminal of one or more control words $CW_C$ for descrambling one or more cryptoperiods of a multimedia content, this terminal transmits (140) a request containing the cryptogram(s) of one or more absent control words to the control word server,
**characterized in that** the terminal receives (180), in addition to the requested absent control words, a determined number of supplementary control words in order to allow this terminal to descramble supplementary cryptoeperiods of the same multimedia content in addition to the cryptoperiods descrambleable using the requested absent control words $CW_C$.

**9.** Information recording medium, **characterized in that** it has instructions for performing a method according to any one of the preceding claims when these instructions are executed by an electronic computer.

**10.** Control word server for control words to terminals that are mechanically and electronically independent of one another, for implementing a method according to Claim 1, this server (106) being capable of transmitting one or more absent control words $CW_C$ to any one of the terminals in response to a request from this terminal containing the cryptogram(s) of the absent control words,
**characterized in that** the control word server (106) is also capable:

- of determining, selectively for each terminal, a number of supplementary control words $CW_s$ to be transmitted to the terminal depending on the probability of the security of these supplementary control words being compromised, on the basis of a confidence index for said terminal and
- of transmitting to this terminal, in addition to the absent control words $CW_C$, the determined number of supplementary control words $CW_S$ in order to allow the terminal to descramble supplementary cryptoperiods of the multimedia content in addition to the cryptoperiods descrambleable using the requested absent control words $CW_C$.

Fig. 1

EP 2 567 500 B1

Fig. 2

Fig. 3

Fig. 4

Fig. 5

Fig. 6

**EP 2 567 500 B1**

## RÉFÉRENCES CITÉES DANS LA DESCRIPTION

**Documents brevets cités dans la description**

- US 20080301437 A1

- WO 2009112966 A2

**Littérature non-brevet citée dans la description**

- EBU Review, Technical European Broadcasting Union. *Functional Model of Conditional Access System,* 21 Décembre 1995